# FASCICULE DE BREVET EUROPEEN

(11) **EP 1 106 069 B1**
(45) Date de publication et mention de la délivrance du brevet: **17.01.2007**
(21) Numéro de dépôt: 00403451.8
(22) Date de dépôt: 08.12.2000
(51) Int. Cl.: A21D 8/02, A21D 13/08, A23P 1/16, A21D 10/00, A21D 2/26

(54) **Procédé de fabrication d'un produit alimentaire cuit alvéolaire**
Verfahren zur Herstellung von gebackenem zellenförmigem Nahrungsmittel
Process for making a baked alveolar food product

(30) Priorité: 08.12.1999 FR 9915463
(43) Date de publication de la demande: 13.06.2001
(73) Titulaire: LU France, 94150 Rungis (FR)
(72) Inventeur: Pillard, Laurent, 91200 Athis Mons (FR); Notardonato, Lélia, 91200 Athis Mons (FR)
(74) Mandataire: Jacquard, Philippe Jean-Luc

(56) Documents cités:
- EP-A- 0 930 014
- US-A- 3 096 179
- US-A- 3 713 845
- US-A- 3 970 763
- US-A- 4 146 652

## Description

La présente invention a pour objet un procédé de fabrication par foisonnement d'un produit alimentaire qui, présente au moins une région ayant une texture alvéolaire.

Il est bien connu de fabriquer industriellement des pâtes telles que des pâtes à génoise en foisonnant l'ensemble des ingrédients et en utilisant si besoin est des substances telles que des émulsifiants pour favoriser le foisonnement. Etant donné que les matières grasses ont un effet inhibiteur de la stabilité des mousses, ces procédés ne permettent que difficilement d'obtenir de pâtes de basse densité lorsque les produits ont une teneur en matière grasse élevée.

La demande de Brevet Européen EP 0 930 014 (GROUPE DANONE) concerne un procédé pour fabriquer une pâte à gâteau foisonné, par exemple une pâte à génoise. Ce procédé vise à éviter le fractionnement de la matière grasse en globules de très petite taille (de l'ordre du micron) qui sont trop petits pour libérer de la matière grasse dans la bouche du consommateur, avec pour conséquence une perte de fondant.

Ce fractionnement intervenant lors du foisonnement, la technique qui est proposée dans cette Demande consiste à adapter le procédé connu en mettant en oeuvre une incorporation différée des matières grasses. Cette incorporation sous forme liquide ou pâteuse est réalisée après foisonnement, ce qui favorise le foisonnement et évite la division des matières grasses.

Selon ce procédé, l'ensemble des ingrédients de la pâte, sauf les matières grasses ajoutées est donc foisonné.

Cette technique laisse subsister des limitations notables en ce qui concerne le niveau de foisonnement qui peut être obtenu. Ceci se traduit en particulier par une densité de pâte foisonnée de l'ordre de 600 g/l. Ce procédé ne convient donc pas à l'obtention de pâtes de basse densité.

Il a par ailleurs été suggéré dans la Demande de Brevet européen EP 680698 (SOPARIND) de réaliser un produit foisonné, par exemple une tourte au fromage en préparant d'une part une mousse foisonnée de blanc d'oeufs montés en neige (oeufs, sel, sucre) et une base non foisonnée à base de fromage blanc, de sucre et de jaunes d'oeufs.

Le produit obtenu après cuisson présente à la fois une teneur en eau élevée, une activité de l'eau AW élevée et une teneur en matière grasse limitée (environ 7% en poids de l'extrait sec).

Le procédé décrit nécessite par ailleurs la mise en oeuvre d'une étape de pré-chauffage "à coeur" à l'aide de micro-ondes qui permet d'obtenir une levée de produits sans retombée lors de la cuisson, ainsi qu'une bonne cuisson des produits.

Ce procédé présente donc des contraintes notables puisqu'aux limitations précédentes, s'ajoute la nécessité de réaliser une cuisson en deux étapes pour que le produit ait les caractéristiques recherchées.

Le Brevet des Etats-Unis US 3 970 763 (LEVER BROTHERS) concerne une préparation pour gâteau réalisée à partir du mélange d'une base foisonnée et d'une base non foisonnée et qui peut être stockée à l'état cru dans un réfrigérateur, ce qui implique une pasteurisation préalable des ingrédients.

Afin d'assurer cette pasteurisation, la base foisonnée présente des oeufs entiers (blanc + jaune), ce qui, en combinaison avec une teneur élevée en sucre, permet à l'oeuf de supporter la température de pasteurisation. Le sucre ajouté et la matière grasse contenue dans le jaune d'oeuf retardent en effet la dénaturation des protéines contenues essentiellement dans le blanc d'oeuf. Par contre, il est connu que la présence de matière grasse (en l'occurrence celle issue du jaune d'oeuf) perturbe le foisonnement du blanc d'oeuf. Pour atteindre les basses densités recherchées pour les bases foisonnées, il est alors nécessaire d'ajouter un émulsifiant, permettant d'abaisser la tension de surface, et un gélifiant et/ou épaississant, pouvant aussi posséder des propriétés tensio-actives comme la gélatine, afin de créer et de maintenir une interface stable autour des alvéoles de la base foisonnée.

Or la mise en oeuvre d'un épaississant et/ou gélifiant tel que ceux mentionnés dans le Brevet précité, surtout la gélatine, constitue une contrainte qu'il convient d'éviter.

L'invention vise un procédé permettant d'obtenir des produits foisonnés fondants susceptibles de présenter une basse densité et une teneur élevée en matières grasses (10% et plus), et présentant à l'état cru une tenue au foisonnement améliorée, ce qui permet de limiter, voire d'éviter le recours à des substances telles que les épaississants et/ou les gélifiants et/ou les émulsifiants exogènes.

On entend par émulsifiant exogène tout produit ajouté dans la formule comme additif au sens des Directives 89/107/CEE du 21 Décembre 1988 et de la Directive CEE 95/2 du 20 Février 1995, et présentant une fonction d'émulsifiant.

L'invention concerne ainsi un procédé de fabrication par foisonnement d'un produit alimentaire dont au moins une région présente une texture alvéolaire, caractérisé en ce qu'il comporte :
a) une préparation d'une base foisonnée exempte de gélatine et comprenant de l'eau, au moins 40% en poids de sucre, entre 1% et 15% en poids de blanc d'oeuf (extrait sec), entre 0,1% et 8% en poids de protéines laitières et/ou de protéines végétales, dont 0,1% à 3% en poids de protéines laitières modifiées et d'une base non foisonnée comprenant au moins une matière grasse et au moins une farine, la teneur en matières grasses étant apte à conférer aux produits cuits une teneur pondérale en matières grasses supérieure ou égale à 10% et notamment comprise entre 10% et 40% ;
b) un mélange des deux bases pour obtenir une pâte crue
c) une cuisson de la pâte crue pour obtenir lesdits produits cuits.

Cette base foisonnée comportant au moins 40% en poids de sucre, ainsi que les protéines ci-dessus mentionnées qui permettent d'obtenir des alvéoles dont l'interface est stabilisé par des protéines, cette base foisonnée étant dépourvue d'ingrédients tels que la farine, les matières grasses et le jaune d'oeuf, permet d'améliorer le foisonnement et d'augmenter également la tenue de la base foisonnée lors de son incorporation à l'autre base, en présence d'un taux même élevé de matières grasses dans la base non foisonnée, et donc dans le produit cuit, sans avoir recours à des épaississants et/ou gélifiants tels que la gélatine (et éventuellement les additifs que sont les gommes) qui sont utilisés dans le Brevet US 3 970 763 précité, et éventuellement sans avoir non plus recours à des émulsifiants exogènes.

Il est particulièrement avantageux d'avoir dans la base foisonnée à la fois une teneur élevée en sucres et un taux d'humidité relativement modéré (15%-45%).

La base foisonnée peut présenter (en poids) entre 40% et 80% en poids de sucre, entre 1% et 15% et de préférence entre 2% et 10% de blancs d'oeuf (mesuré en extrait sec), entre 0% et 10% et de préférence entre 1% et 10% de lait écrémé (mesuré en extrait sec), entre 0,1% et 3% de protéines laitières et/ou de protéines végétales (gluten natif ou hydrolysé, et/ou protéines de soja et/ou protéines de pois), et entre 15% et 45% d'eau.

Après foisonnement, la base foisonnée présente avantageusement une densité comprise entre 100 g/l et 400 g/l.

L'autre base, non foisonnée, peut présenter en poids entre 5% et 38% de matière grasse, entre 15% et 45% de farine, entre 0% et 20% et de préférence entre 1% et 20% de jaune d'oeuf (mesuré en extrait sec), entre 0% et 15% et notamment entre 1% et 15% de sucre, entre 0% et 10% et notamment entre 1% et 10% de cacao, entre 0% et 15% et notamment entre 1% et 15% de glycérol et/ou sorbitol et entre 0% et quelques % d'autres ingrédients

La base non foisonnée peut présenter entre 2% et 35% d'eau ajoutée.

La proportion pondérale du mélange entre la base foisonnée et la base non foisonnée peut être comprise entre 10% /90% et 35%/65%

Le mélange entre les deux bases est réalisé de préférence dans un mélangeur statique.

Selon un mode de réalisation préféré, la base non foisonnée est, avant mélange, portée à une température comprise entre 35°C et 50°C, notamment entre 37°C et 45°C, et plus particulièrement entre 37°C et 42°C.

Ceci permet de limiter, voire d'éviter, toute retombée de la mousse lors du mélange des deux bases. La société Demanderesse est d'avis que ceci est dû à l'augmentation des interactions hydrophobes. Ceci permet d'obtenir des produits fondants à plus faible densité, sans recours nécessaire à des émulsifiants exogènes.

La cuisson des produits peut être réalisée par exemple entre sensiblement 170°C et 200°C.

La base non foisonnée est également de préférence exempte d'additifs constitués par les gommes (par exemple carraghenane, guar, caroube, alginate), en particulier celles qui sont citées dans le Brevet US 3 970 763.

L'invention concerne également un produit alimentaire de type moelleux et fondant cuit et produit par le procédé ci-dessus. Il présente au moins une région de texture alvéolaire caractérisé en ce que la dite région est exempte de gélatine et éventuellement de gommes et présente :
- une activité de l'eau AW comprise entre 0,65 et 0,9 et plus particulièrement entre 0,75 et 0,85 ;
- un taux de matière grasse représentant entre 10% et 50% en poids, notamment entre 10% et 40% et plus particulièrement entre 15% et 30% ;
- une densité comprise entre 150 g/l et 350 g/l.

Le taux de matières grasses peut être compris entre 15% et 30% en poids.

Le produit est avantageusement du type stockable en rayonnage (« shelf-stable »), par opposition à un produit frais qui doit être stocké en milieu réfrigéré.

De manière préférentielle, le produit est essentiellement dépourvu d'émulsifiant exogène.

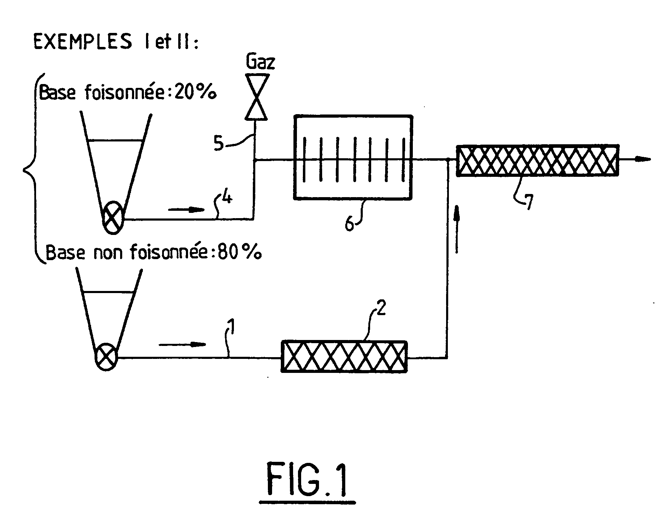

L'invention sera mieux comprise à la lecture de la description qui va suivre, donnée à titre d'exemple non limitatif, en liaison avec la figure unique qui illustre une installation pour la mise en oeuvre du procédé selon l'invention.

Le procédé selon l'invention met en oeuvre une base foisonnée et une base non foisonnée, notamment :

### A) Base foisonnée (en teneur pondérale)

| | | |
|---|---|---|
| ■ Sucre(s) (extrait sec) | | 40% - 80% |
| ■ Blanc d'oeuf | | 1% - 15% |
| (extrait sec de blanc d'oeuf ajouté ou poudre) | et de préférence | 2%-10% |
| ■ Lait écrémé | | 0% - 10% |
| (extrait sec de lait ajouté ou lait en poudre) | et de préférence | 1 % - 10% |
| ■ Eau | | 15% - 45% |
| (teneur totale eau ajoutée, et teneur en eau du blanc d'oeuf et/ou du lait et/ou des sucres) | | |
| ■ Autres ingrédients (arômes, etc ...) | | 0% - 5% |
| ■ Protéines laitières et/ou protéines végétales (par exemple gluten natif ou hydrolysé, et/ou protéines de soja et/ou protéines de pois) dont protéines laitières modifiées 0,1% - 3% par exemple, protéines issues du fractionnement du lait (par exemple caséinates, caséinates hydrolysés, et/ou protéines sériques hydrolysées) | | 0,1%-8% |

Les ingrédients de la base sont mélangés dans un pétrin, puis la base est foisonnée sur un foisonneur continu.

### B) Base non foisonnée (en teneur pondérale)

| | | |
|---|---|---|
| ■ Matière grasse | | (5% - 38%), |
| | notamment | (10% - 35%) |
| ■ Farine | | 15% - 45% |
| ■ Jaune d'oeuf | | 0% - 20% |
| (extrait sec ou poudre) | et de préférence entre | 1% et 20% |
| ■ Sucre(s) (extrait sec) | | 0%-15% |
| | notamment | 1 % - 15% |
| ■ Eau | | 2% - 35% |
| (ajoutée et/ou teneur en eau de jaune d'oeuf ou des sucres) | | |
| ■ Cacao | | 0% -10% |
| | notamment | 1 % - 15% |
| ■ Glycérol et/ou Sorbitol | | 0% - 15% |
| | notamment | 1 % - 15% |
| ■ Autres ingrédients | | 0% à quelques % |

Les ingrédients de la base non foisonnée sont mélangés dans un pétrin. Elle est éventuellement réchauffée à travers un dispositif de chauffage jusqu'à environ 37° - 42°C.

Le procédé met par exemple en oeuvre un foisonnement de la base foisonnée, jusqu'à obtention d'une densité de 300 g/l à 15°C. La présence des protéines laitières et/ou desdites protéines végétales et plus particulièrement des protéines laitières modifiées, permet d'obtenir une alvéolation dont l'interface est entièrement stabilisée par des protéines et qui reste cependant stable avec la teneur élevée en sucre qui est mise en oeuvre. Il n'y a pas d'utilité à utiliser des additifs constitués par les gommes (carraghenanes, guar, caroube, alginate), car elles ne contribuent pas à la formation d'une interface protéique stable. Toutefois, il reste possible de les utiliser dans le cadre de l'invention à condition que leur teneur soit suffisamment faible pour ne pas affecter cette interface protéique, en particulier pour éviter de créer une interface de type mixte.

A la base foisonnée, est mélangée en continu une proportion donnée (par exemple 75% en poids) de la base non foisonnée préalablement portée à 37° - 42°C. Le mélange, réalisé par exemple dans un mélangeur statique présente alors une densité de l'ordre de 500 à 600 g/l. Il est déposé dans un moule, puis cuit.

La proportion pondérale (BB/BJ) entre la base foisonnée BB et la base non foisonnée BJ est notamment comprise entre 10/90 et 35/65.

### Exemple de procédé de fabrication :

### Fabrication de la base foisonnée

1. Mélange de tous les ingrédients de cette base grâce à un pétrin type Hobart muni d'un outil de mélange type feuille. Température du mélange final : 15°C.
2. Foisonnement de la base sur un foisonneur continu, par exemple de marque : Mondomix ; la densité de la base aérée est égale à 200 g/l, sa température est égale à 15°C.

### Fabrication de la base non foisonnée

1. Mélange de tous les ingrédients de cette base grâce à un pétrin type Hobart avec feuille, pour obtenir une pâte crue. Température finale = 25°C.
2. On pompe la base à travers une canalisation.
3. On réchauffe la pâte à travers un dispositif de chauffage pouvant être une surface raclée ou un échangeur de chaleur adapté. On élève ainsi la température de la pâte à 37°C. Cette pâte est alors mélangée avec la base foisonnée.

### Mélange des deux bases

Les deux bases sont mélangées grâce à un mélangeur statique de type SMX de marque Sulzer. On dose la proportion en réglant les pompes de manière à avoir un débit massique de 20% pour la base foisonnée et 80% pour la base non foisonnée.

Pour un débit total de 20 kg/h le mélangeur statique possède les caractéristiques suivantes : mélangeur statique type SMX de la société Sulzer, diamètre : 20 mm, longueur de mélange : 25 cm, cisaillement : de l'ordre de 70s⁻¹. Dans ces conditions, la densité finale du mélange des deux bases est de 550 g/l ± 20 g/l, et la température est de 30°C.

### Produit final

La pâte est déposée dans un moule et cuit 35 minutes à 185°C. Le produit final s'apparente à une génoise.
On donne ci-après à titre d'exemple la fabrication d'une génoise au chocolat (Exemple I) et d'une génoise nature (Exemple II), fabriqués selon l'exemple de procédé de fabrication ci-dessus.

*La composition des deux bases est donnée ci-après (les pourcentages sont donnés en poids :

| | MP | Exemple I : chocolat | | Exemple II : nature | |
|---|---|---|---|---|---|
| | | %Base | %Total | %Base | %Total |
| Base Foisonnée | Sucre semoule | 53,5 | 10,7 | 53,5 | 10,7 |
| | Caséinates hydrolysées | 2,1 | 0,4 | 2,1 | 0,4 |
| | Sel | 1,6 | 0,3 | 1,6 | 0,3 |
| | Poudre de lait écrémé | 10,7 | 2,1 | 10,7 | 2,1 |
| | Blanc d'oeuf liquide | *32,1 | 6,5 | *32,1 | 6,5 |
| | Total | 100,0 | | 100,0 | |
| | % base foisonnée | | 20,0 | | 20,0 |
| Base non Foisonnée | Jaune d'oeuf liquide | **22,4 | 17,9 | 24,5 | 19,5 |
| | Glycérol | 2,5 | 2 | 2,4 | 2 |
| | Sorbitol | 3,7 | 3 | 3,7 | 2,9 |
| | Glucose | 5 | 4 | 7,3 | 5,9 |
| | Poudre de cacao | 3,1 | 2,5 | 0,0 | 0,0 |
| | Eau | 10 | 8 | 7,3 | 5,9 |
| | Farine | 24,9 | 20 | 29,5 | 23,5 |
| | Bicarbonate de soude | 0,4 | 0,3 | 0,4 | 0,3 |
| | Pyrophosphate acide de Nₐ | 0,5 | 0,4 | 0,5 | 0,4 |
| | Beurre | 27,5 | 21,9 | 24,4 | 19,6 |
| | Total | 100,0 | | 100,0 | |
| | % base non foisonnée | | 80,0 | | 80,0 |

| | | | | | |
|---|---|---|---|---|---|
| * dont 9,3 % d'extrait sec et 22,8 % d'eau soit en tout 32,1% ** dont 11,2% d'extrait sec et 11,2% d'eau soit en tout 22,4%. | | | | | |

La densité de la base foisonnée peut être comprise entre 100g/l et 400 g/l environ ce qui est rendu possible par une forte teneur en sucre et une teneur en eau relativement faible, qui favorise le foisonnement ainsi que la tenue de la mousse lors de son incorporation à la pâte (base non foisonnée).

A titre d'exemple :
- la base foisonnée présente, avant son foisonnement, une viscosité apparente de 200 poises (20°C) et après foisonnement, une viscosité apparente de 2000 poises (15°C) la mousse ayant une densité de 300 g/l ;
- la base non foisonnée présente avant son chauffage dans un mélangeur statique, une viscosité apparente de 700 poises (à 30°C) ;
- après mélange des deux bases, la pâte crue présente une viscosité apparente de 400 poises à 30°C et une densité de 550 g/l.

Ces viscosités ont été mesurées à l'aide d'un viscosimètre de la marque Brookfield, module 93, vitesse 5.

On obtient après cuisson des produits moelleux et fondants ayant au moins une région de structure alvéolaire de caractéristiques suivantes :

| | |
|---|---|
| ■ activité de l'eau AW: | 0,7 à 0,9, |
| et plus particulièrement | 0,75 à 0,85 ; |
| ■ Taux de matières grasses : | 10% à 50%, |
| notamment | 10% à 40% |
| et plus particulièrement | 15% à 30% ; |
| ■ Densité: | 150 g à 350 g/l. |

Le produit peut être fourré. Ce peut être par exemple une génoise fourrée.

Dans le cadre du procédé selon l'invention, des protéines peuvent être apportées dans la base foisonnée par des protéines de lait éventuellement hydrolysées et/ou des protéines végétales.

Les protéines peuvent présenter les proportions suivantes (en poids de la base foisonnée) :
0,1% à 8% de protéines laitières et/ou protéines végétales dont 0,1% à 3% de protéines laitières modifiées.

Les protéines provenant du blanc d'oeuf peuvent constituer par exemple 5% à 25% de la base foisonnée.

Une installation pour la mise en oeuvre en continu du procédé est représentée à la figure unique.

La base non foisonnée 1 est amenée à un mélangeur statique 2 entouré d'une double enveloppe maintenue à 50°C où elle est soumise à un cisaillement faible pour la chauffer à une température de l'ordre de 37°C.

La base foisonnée 4 est additionnée de gaz en 5, et elle est foisonnée dans un foisonneur 6 à une température qui peut être comprise entre 10°C et 30°C, par exemple entre 10°C et 25°C et de préférence comprise entre 12°C et 20°C. Les sorties du mélangeur statique 2 et du foisonneur 6 attaquent l'entrée d'un mélangeur statique 7, à la sortie duquel s'effectue la dépose des pâtons crus. Ceux-ci sont cuits dans un four de manière classique.

## Revendications

1. Procédé de fabrication par foisonnement d'un produit alimentaire dont au moins une région présente une texture alvéolaire, **caractérisé en ce qu'**il comporte :
a) une préparation d'une base foisonnée exempte de gélatine et comprenant de l'eau et au moins 40% en poids de sucre, entre 1% et 15% en poids de blanc d'oeuf (extrait sec), entre 0,1% et 8% en poids de protéines laitières et/ou de protéines végétales dont entre 0,1% et 3% de protéines laitières modifiées et d'une base non foisonnée comprenant au moins une matière grasse et au moins une farine, la teneur en matières grasses étant apte à conférer aux produits cuits une teneur pondérale en matières grasses supérieure ou égale à 10% et notamment comprise entre 10% et 40% ;
b) un mélange des deux bases pour obtenir une pâte crue
c) une cuisson de la pâte crue pour obtenir lesdits produits cuits.

2. Procédé selon la revendication 1, **caractérisé en ce que** la base foisonnée présente (en poids) entre 40% et 80% en poids de sucre, entre 0% et 10% et notamment entre 1% et 10% de lait (mesuré en extrait sec), et entre 15% et 45% d'eau.

3. Procédé selon une des revendications 1 ou 2, **caractérisé en ce que** la base foisonnée présente une densité comprise entre 100 g/l et 400 g/l.

4. Procédé selon une des revendications 1 à 3, **caractérisé en ce que** la base non foisonnée présente (en poids) entre 5% et 38% de matière grasse, entre 15% et 45% de farine, entre 0% et 20% de jaune d'oeuf (mesuré en extrait sec), entre 0% et 15% de sucre, entre 0% et 10% de cacao, entre 0% et 15% de glycérol et/ou sorbitol et entre 0% et quelques % d'autres ingrédients.

5. Procédé selon la revendication 4, **caractérisé en ce que** la base non foisonnée présente en poids entre 2% et 35% d'eau ajoutée.

6. Procédé selon une des revendications précédentes, **caractérisé en ce que** la proportion pondérale du mélange entre la base foisonnée et la base non foisonnée est comprise entre 10%/90% et 35%/65%.

7. Procédé selon une des revendications précédentes, **caractérisé en ce que** le mélange des deux bases est réalisé dans un mélangeur statique.

8. Procédé selon une des revendications précédentes, **caractérisé en ce que**, avant mélange, la base non foisonnée est portée à une température comprise entre 35°C et 50°C, notamment entre 37°C et 45°C et de préférence entre 37°C et 42°C.

9. Procédé selon une des revendications précédentes, **caractérisé en ce que** la densité des produits cuits est comprise entre 150 g/l et 350 g/l.

10. Procédé selon une des revendications précédentes, **caractérisé en ce que** la cuisson est réalisée entre sensiblement 170°C et 200°C.

11. Procédé selon une des revendications précédentes, **caractérisé en ce que** la base foisonnée est également exempte d'émulsifiant exogène et/ou de gommes.

12. Produit alimentaire de type moelleux et fondant cuit et présentant au moins une région de texture alvéolaire **caractérisé en ce que** ladite région de texture alvéolaire est exempte de gélatine et d'émulsifiant exogène et présente :
- une activité de l'eau AW comprise entre 0,65 et 0,9 ;
- un taux de matière grasse représentant entre 15 % et 50 % en poids, et plus particulièrement entre 15 % et 40 % ;
- une densité comprise entre 150 g/l et 350 g/l, et produit par le procédé selon les revendications 1 à 11.

13. Produit alimentaire selon la revendication 12, **caractérisé en ce que** le taux de matière grasse est compris entre 15 % et 30 %.

14. Produit alimentaire selon une des revendications 12 ou 13, **caractérisé en ce que** l'activité de l'eau AW est comprise entre 0,75 et 0,85.

15. Produit alimentaire selon une des revendications 12 à 14, **caractérisé en ce qu'**il est de type stockable en rayonnage.

16. Produit alimentaire selon une des revendications 12 à 15, **caractérisé en ce qu'**il est essentiellement dépourvu de gommes.

## Claims

1. A process for the production by expansion of a food product, at least one area of which has a cellular texture, **characterised in that** it comprises:
a) preparing a gelatin-free, expanded base composed of water and at least 40 wt.% sugar, between 1 wt.% and 15 wt.% egg white (dry extract), between 0.1 wt.% and 8 wt.% milk proteins and/or vegetable proteins including between 0.1% and 3% modified milk proteins, and a non-expanded base composed of at least one fat and at least one flour, the fat content being capable of providing the baked products with a fat content greater than or equal to 10 wt.% and particularly from 10 wt.% to 40 wt.%;
b) mixing the two bases to obtain a raw dough
c) baking the raw dough to obtain said baked products.

2. The process according to claim 1, **characterised in that** the expanded base has between 40 wt.% and 80 wt.% sugar, between 0 wt.% and 10 wt.%, and particularly between 1 wt.% and 10 wt.%, milk (measured as dry extract) and between 15 wt.% and 45 wt.% water.

3. The process according to one of claims 1 or 2, **characterised in that** the expanded base has a density of 100 g/l to 400 g/l.

4. The process according to one of claims 1 to 3, **characterised in that** the non-expanded base has between 5 wt.% and 38 wt.% fat, between 15 wt.% and 45 wt.% flour, between 0 wt.% and 20 wt.% egg yolk (measured as dry extract), between 0 wt.% and 15 wt.% sugar, between 0 wt.% and 10 wt.% cocoa, between 0 wt.% and 15 wt.% glycerol and/or sorbitol and between 0 wt.% and several wt.% of other ingredients.

5. The process according to claim 4, **characterised in that** the non-expanded base has between 2 wt.% and 35 wt.% added water.

6. The process according to one of the above claims, **characterised in that** the proportion by weight of expanded base and non-expanded base in the mixture is between 10%/90% and 35%/65% inclusive.

7. The process according to one of the above claims, **characterised in that** the mixing of the two bases is carried out in a static mixer.

8. The process according to one of the above claims, **characterised in that**, before mixing, the non-expanded base is brought to a temperature of 35°C to 50°C, particularly 37°C to 45°C and preferably 37°C to 42°C.

9. The process according to one of the above claims, **characterised in that** the density of the baked products is between 150 g/l and 350 g/l inclusive.

10. The process according to one of the above claims, **characterised in that** the baking is carried out substantially between 170°C and 200°C.

11. The process according to one of the above claims, **characterised in that** the expanded base is also free from exogenous emulsifier and/or gums.

12. A baked food product of the soft, melting type having at least one area with a cellular texture, **characterised in that** said area with a cellular texture is free from gelatin and exogenous emulsifier and has:
- a water activity AW of 0.65 to 0.9;
- a fat content representing between 15 wt.% and 50 wt.%, more particularly between 15 wt.% and 40 wt.%;
- a density of 150 g/l to 350 g/l, and produced by the process according to claims 1 to 11.

13. The food product according to claim 12, **characterised in that** the fat content is from 15% to 30%.

14. The food product according to one of claims 12 or 13, **characterised in that** the water activity AW is from 0.75 to 0.85.

15. The food product according to one of claims 12 to 14, **characterised in that** it is of a type suitable for shelf storage.

16. The food product according to one of claims 12 to 15, **characterised in that** it is substantially free from gums.

## Patentansprüche

1. Verfahren zur Herstellung eines Nahrungsmittels durch Schaumigschlagen, von dem mindestens ein Bereich eine zellenartige Struktur aufweist, **dadurch gekennzeichnet, dass** es umfasst:
a) eine Zubereitung einer schaumiggeschlagenen Grundmasse, die frei von Gelatine ist, Wasser und mindestens 40 Gew.-% Zucker, zwischen 1 und 15 Gew.-% Eiweiß (Trockenextrakt), zwischen 0,1 und 8 Gew.-% Milchproteine und/oder pflanzliche Proteine, davon zwischen 0,1% und 3% modifizierte Milchproteine, und eine nicht schaumiggeschlagene Grundmasse enthält, die mindestens einen Fettstoff und mindestens Mehl umfasst, wobei der Gehalt an Fettstoffen dazu ausgelegt ist, den gebackenen Produkten einen Gewichtsgehalt an Fettstoffen von größer oder gleich 10% und insbesondere zwischen 10% und 40% zu verleihen;
b) eine Mischung zweier Grundmassen, um einen Rohteig zu erhalten
c) Backen des Rohteigs, um die Backprodukte zu erhalten.

2. Verfahren nach Anspruch 1, **dadurch gekennzeichnet, dass** die schaumiggeschlagene Grundmasse (gewichtsanteilig) zwischen 40 und 80 Gew.-% Zucker, zwischen 0% und 10%, und insbesondere zwischen 1 % und 10% Milch (abgemessen als Trockenextrakt), und zwischen 15% und 45% Wasser enthält.

3. Verfahren nach einem der Ansprüche 1 oder 2, **dadurch gekennzeichnet, dass** die schaumiggeschlagene Grundmasse eine Dichte zwischen 100 g/l und 400g/l aufweist.

4. Verfahren nach einem der Ansprüche 1 bis 3, **dadurch gekennzeichnet, dass** die nicht schaumiggeschlagene Grundmasse (gewichtsanteilig) zwischen 5% und 38% Fett, zwischen 15% und 45% Mehl, zwischen 0% und 20% Eidotter (abgewogen als Trockenextrakt), zwischen 0% und 15% Zucker, zwischen 0% und 10% Kakao, zwischen 0% und 15% Glyzerin und/oder Sorbitol, und zwischen 0% und einigen % weitere Inhaltsstoffe enthält.

5. Verfahren nach Anspruch 4, **dadurch gekennzeichnet, dass** die nicht schaumiggeschlagene Grundmasse gewichtsanteilig zwischen 2% und 35% zugesetzten Wassers enthält.

6. Verfahren nach einem der vorhergehenden Ansprüche, **dadurch gekennzeichnet, dass** das Gewichtsverhältnis der Mischung zwischen der schaumiggeschlagenen und der nicht schaumiggeschlagenen Grundmasse zwischen 10%/90% und 35%/65% beträgt.

7. Verfahren nach einem der vorhergehenden Ansprüche, **dadurch gekennzeichnet, dass** das Mischen der beiden Grundmassen in einer Standmischanlage erfolgt.

8. Verfahren nach einem der vorhergehenden Ansprüche, **dadurch gekennzeichnet, dass** vor dem Mischen die nicht schaumiggeschlagene Grundmasse auf eine Temperatur zwischen 35°C und 50°C, insbesondere zwischen 37°C und 45°C, und vorzugsweise zwischen 37°C und 42°C erwärmt wird.

9. Verfahren nach einem der vorhergehenden Ansprüche, **dadurch gekennzeichnet, dass** die Dichte der Backprodukte zwischen 150 g/l und 350 g/l beträgt.

10. Verfahren nach einem der vorhergehenden Ansprüche, **dadurch gekennzeichnet, dass** das Backen im Wesentlichen zwischen 170°C und 200°C erfolgt.

11. Verfahren nach einem der vorhergehenden Ansprüche, **dadurch gekennzeichnet, dass** die schaumiggeschlagene Grundmasse auch frei von exogenem Emulgiermittel und/oder Gummiharzen ist.

12. Gebackenes, weiches und auf der Zunge zergehendes Nahrungsmittel, das mindestens einen Bereich mit zellenartiger Struktur aufweist, **dadurch gekennzeichnet, dass** der Bereich der zellenartigen Struktur frei von Gelatine und exogenem Emulgiermittel ist und Folgendes aufweist:
- eine Wasseraktivität AW zwischen 0,65 und 0,9;
- einen Fettgehalt, der zwischen 15 und 50 Gew.-%, und im Spezielleren zwischen 15 und 40 Gew.-% beträgt;
- eine Dichte, die zwischen 150 g/l und 350 g/l beträgt und durch das Verfahren nach den Ansprüchen 1 bis 11 hergestellt ist.

13. Nahrungsmittel nach Anspruch 12, **dadurch gekennzeichnet, dass** der Fettgehalt zwischen 15% und 30% beträgt.

14. Nahrungsmittel nach einem der Ansprüche 12 oder 13, **dadurch gekennzeichnet, dass** die Wasseraktivität AW zwischen 0,75 und 0,85 beträgt.

15. Nahrungsmittel nach einem der Ansprüche 12 bis 14, **dadurch gekennzeichnet, dass** es von der in Regalen lagerbaren Art ist.

16. Nahrungsmittel nach einem der Ansprüche 12 bis 15, **dadurch gekennzeichnet, dass** es im Wesentlichen frei von Gummiharzen ist.
